# EUROPEAN PATENT APPLICATION

(11) **EP 0 860 827 A2**
(43) Date of publication of application: **26.08.1998**
(21) Application number: 98301291.5
(22) Date of filing: 23.02.1998
(51) Int. Cl.: G11B 20/18, G11B 5/02

(54) **Data verification**

(30) Priority: 24.02.1997 US 805120
(71) Applicant: Hewlett-Packard Company, Palo Alto, CA 94303 (US)
(72) Inventor: Barndt, Richard D., Fremont, CA 94555 (US)
(74) Representative: Powell, Stephen David

(57) **Abstract**

In a method and apparatus for detecting the integrity of data previously written to a magnetic medium while writing new data to the magnetic medium, a write transducer writes data to the magnetic medium and a read transducer (56) subsequently reads the data from the magnetic medium. Electrical implementation of autocorrelation and crosscorrelation functions can be used to separate interference signals and the information signals at the output of the read transducer. The read response signal can be monitored to detect errors in the written data. If errors are detected, the information can be rewritten.

## Description

This invention relates generally to the verification of the integrity of data and in particular to a method and apparatus for read-while-write magnetic recording and error detection. In particular, it relates to an inexpensive method and apparatus for detection of unreadable blocks of data previously written to a magnetic medium simultaneous with writing information to the magnetic medium.

Data can be written to a magnetic medium through a write transducer coupled to the magnetic medium. It is desirable to be able to detect if errors occurred while the data was written to the magnetic medium. Furthermore, it is desirable to be able to detect errors in written data without interrupting the process of writing new data. If errors are detected, the erroneously written data can be written to the magnetic medium a second time.

Data can be read from the magnetic medium with a read transducer coupled to the magnetic medium. Reading the data after the data has been written to the magnetic medium can provide verification ofthe integrity of the written data. That is, the written data can be read from the magnetic medium and compared with what was suppose to have been written to determine if any errors occurred while the data was written to the magnetic medium.

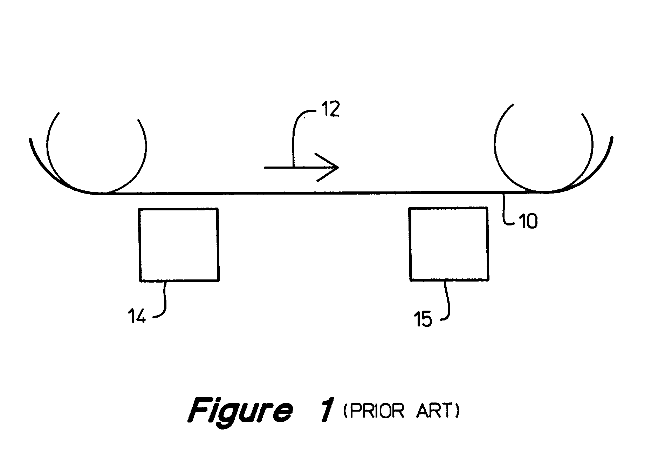

Figure 1 shows a magnetic tape 10 moving in a direction as depicted by an arrow 12. A write transducer 14 is coupled to a surface of the magnetic tape 10 and can write information to the tape 10. A read transducer 15 is also coupled to the surface of the magnetic tape 10 and can read information from the tape 10. The surface of the tape 10 moves from the write transducer 14 towards the read transducer. Therefore, a bit of information is written to the tape 10 by the write transducer 14 before the bit is read from the tape 10 by the read transducer 15.

For the configuration shown in Figure 1, it is possible to read data previously written simultaneous with writing new data. That is, it is possible to write a first bit to the surface ofthe tape 10 with the write transducer 14 and subsequently read the first bit from the surface of the tape 10 with the read transducer 15 while the write transducer is writing a second bit to the surface of the tape 10. Generally, several bits are written between writing the first bit and writing the second bit. Electric and magnetic coupling, however, can occur between the write transducer 14 and the read transducer 15. The coupling introduces interference to information read from the tape 10 by the read transducer 15. When a bit is written to the tape 10 by the write transducer 14, a transient signal is coupled onto the output of the read transducer 15. The transient can interfere with information read from the tape 10 by the read transducer. The interference can prevent read-while-write operation of the read and write transducers.

Prior art solutions of preventing the write transducer from interfering with the response of the read transducer in read-while-write systems rely on physical separation of the read and write transducers or shielding between the read and write transducers. The objective of these solutions is to reduce the interference so that the read head can operate the same in reading-while-write mode as when in solely read mode. These solutions are expensive because they generally require two separate recording heads or expensive shielding.

It would be desirable to have a method and apparatus which provides verification of the integrity of information written to a magnetic medium simultaneous with the writing of new information to the magnetic medium which does not require separate recording heads or expensive shielding. The method and apparatus should not be complicated and should be inexpensive.

The present invention is an apparatus and method for detecting errors in data written to a magnetic medium simultaneous with writing new information to the magnetic medium. A read transducer reads information from the magnetic medium after a write transducer has written the information to the magnetic medium. The information read from the magnetic medium is compared with the data that was written to the magnetic medium. Detection of errors dictates re-writing the information to the magnetic medium. The invention is operable even when large amounts of write interference generated by a write transducer is coupled to the response of a read transducer.

A first embodiment of the invention is an apparatus for verifying the integrity of a block of data written to a magnetic medium. The embodiment includes a write transducer for coupling a write signal to the magnetic medium and a read transducer for coupling a magnetic signal from the magnetic medium generating a read signal. The embodiment further includes a delay circuit, a multiplier and a filter. The delay circuit delays a reference signal. The multiplier multiplies the delayed reference signal with the read signal generating a multiply signal. The filter filters the multiply signal generating a filtered signal having an amplitude. A threshold detector detects whether the amplitude of the filtered signal exceeds a predetermined level which indicates that data was written incorrectly.

Another embodiment of the invention includes the reference signal being either the read signal or the write signal. The predetermined amount of time is dependent on the physical separation between the write transducer and the read transducer, and the rate in which data is written to the magnetic medium.

Other aspects and advantages of the present invention will become apparent from the following detailed description, taken in conjunction with the accompanying drawings, illustrating by way of example the principles of the invention.

Figure 1 shows a magnetic write head and a magnetic read head coupled to a magnetic medium.

Figure 2 shows a read signal which results from interference generated at the read head when the write head is in the process of writing.

Figure 3 shows a read signal which results from a bit being read by the read transducer after the bit has been written by the write transducer.

Figure 4 shows the read head response which results from both the interference signal and a written bit being coupled to the read head.

Figure 5 shows an embodiment of the invention.

Figure 6 shows another embodiment of the invention.

Figure 7 show a typical write signal coupled to a write transducer.

Figure 8 shows an implementation of the multiplier circuitry.

Figure 9 shows another embodiment of the invention.

Figure 10 shows near-ideal read responses to two bits of opposite polarity.

Figure 11 shows another implementation of the multiplier circuitry.

As shown in the drawings for purposes of illustration, the invention is embodied in an apparatus and method for detecting whether data has been incorrectly written to a magnetic medium. The detection is made simultaneously with data being written to the magnetic medium. If a block of written data is determined to be erroneous, the block of data can be re-written on the magnetic medium.

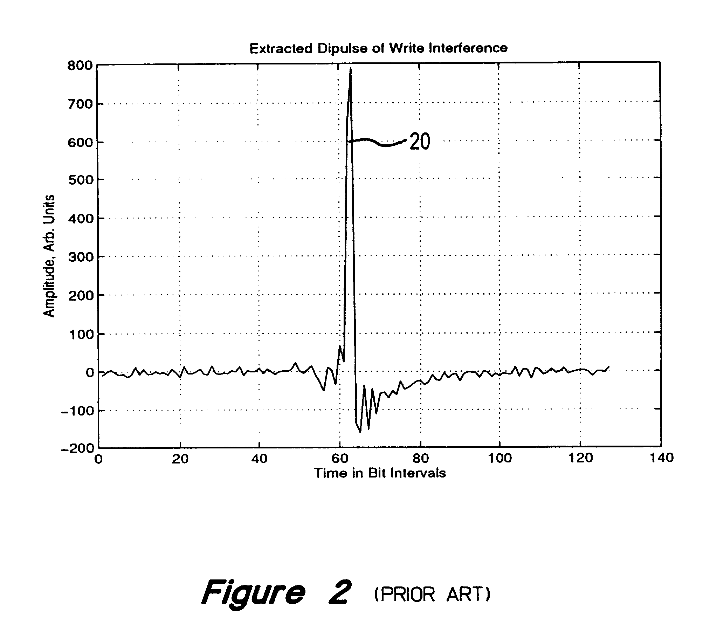

Figure 2 shows a read transducer response when a write transducer is writing a bit to a magnetic medium. The response includes a transient 20 which is coupled to the output of the read transducer when the write transducer is writing a bit to the magnetic medium. The read transducer and the write transducer are coupled to the same magnetic medium. Therefore, the read transducer is proximate with the write transducer. The proximity of the read transducer with the write transducer allows the high frequency components associated with signal transitions at the write transducer to couple onto the output response ofthe read transducer. The signal coupling between the write transducer and the read transducer can interfere with the normal read process of the read transducer.

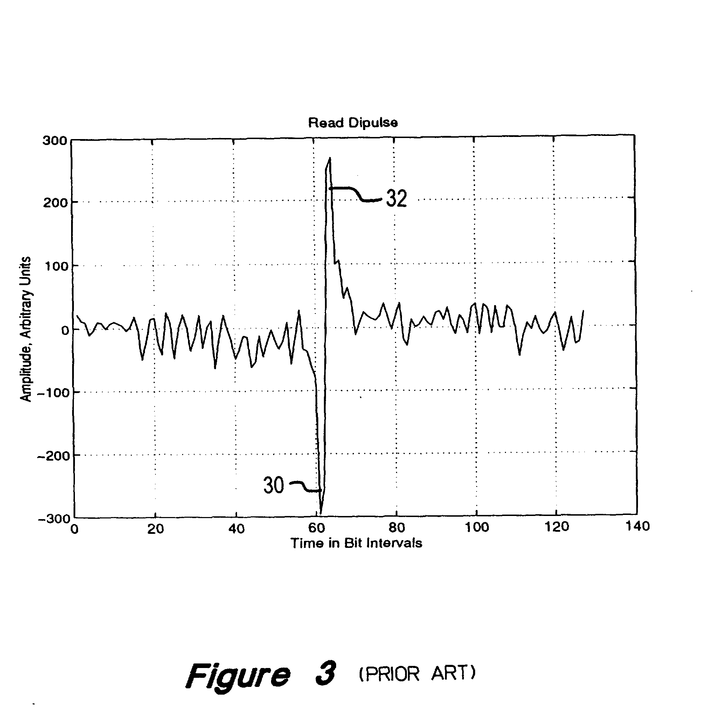

Figure 3 shows the response of the read transducer when reading a bit from the magnetic medium. This response does not depict any interference from the write transducer. The response includes a negative spike 30 and a positive spike 32. The sequence of the negative spike 30 and the positive spike 32 is dependent on the polarity or value ofthe bit being read.

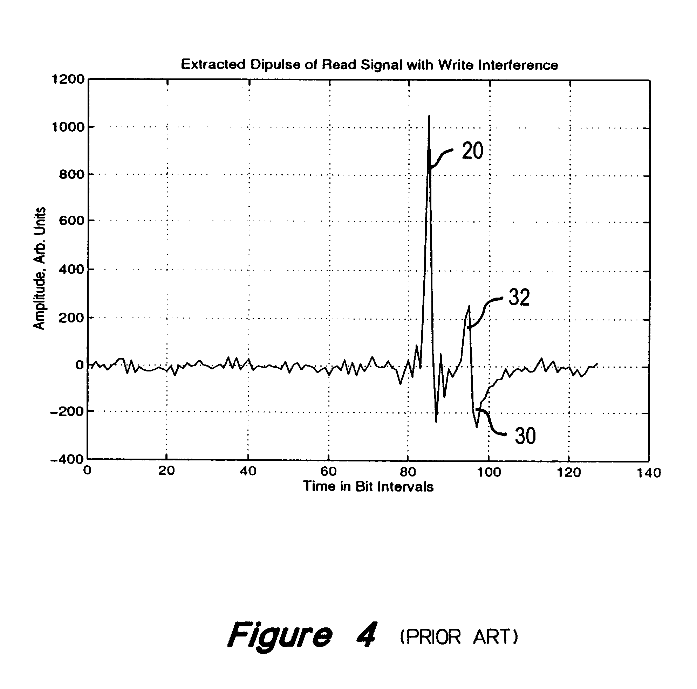

Figure 4 shows the response of the read transducer when the write transducer is writing a bit and the read transducer is reading the same bit. The first spike 20 is the transient coupled to the output of the read transducer when the write transducer is writing a bit. The smaller positive spike 32 and the negative spike 30 are generated by the bit being read from the magnetic medium. This response represents the writing and reading of a single bit. The time delay between the transient response 20 and the read response 30, 32 is determined by the physical spacing between the write transducer and the read transducer and the speed the magnetic medium is moving. The greater the distance between the write transducer and the read transducer, the greater the time delay between the transient response and the bit read response.

As previously mentioned, the read transducer response shown in Figure 4 includes the transient and bit read response for a single bit. However, if many bits are serially written and read from the magnetic medium at the same time, the transient responses and bit read response of the bits will superimpose. That is, the transient responses on the output of the read transducer due to the write transducer will occur at the same time that the read transducer is reading a bit. The result is that the transient responses will interfere with the read responses at the output of the read transducer.

Determination of the integrity of the written information (bits) requires separation of the interference signals and the information signals at the output of the read transducer. Two mathematical methods of detection or recognition of signal masked by additive noise are the autocorrelation and crosscorrelation functions.

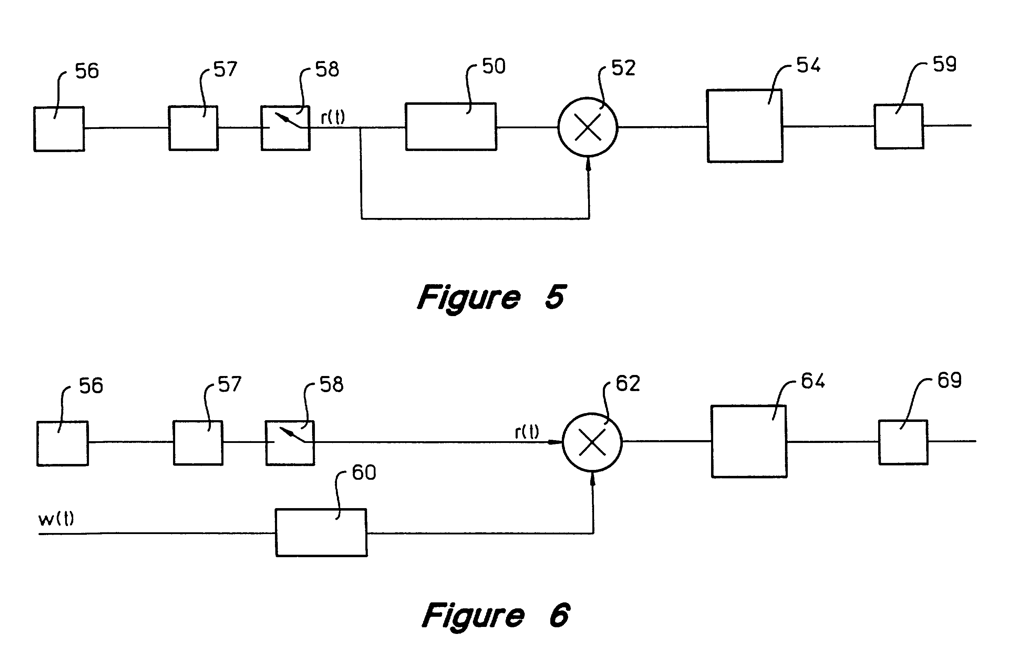

Figure 5 shows an embodiment of this invention within a recording device. This embodiment includes circuitry which implements an autocorrelation function. The embodiment includes a read transducer 56, sampling circuitry 58, delay circuitry 50, multiplier circuitry 52, filtering circuitry 54 and threshold detect circuitry 59. Generally, the circuit elements 50, 52 , 54 and 59 of this embodiment are implemented with digital electronic circuits. The threshold detect circuitry 59 drives a processing unit within the recording device. If the threshold detect circuitry 59 detects errors in the written data, the processing unit within the recording device can rewrite the information.

The write transducer writes a bit to the magnetic medium before the read transducer reads the bit from the magnetic medium. During the time between the writing of a particular bit and the reading of a particular bit, the write transducer writes M bits to the magnetic medium. Therefore, M is determined by the spacing between the write transducer and the read transducer, the speed that the magnetic medium moves from the write transducer and the read transducer, and the rate that the write transducer writes bits of information to the magnetic medium.

Detection of an erroneously written bit requires distinguishing between the response shown in Figure 4 and the response shown in Figure 2. That is, distinguishing between a read signal that consists of the interference transient 20 shown in Figure 2, and a read signal that also includes the negative spike 30 and the positive spike 32 of Figure 4. The negative spike 30 and the positive spike 32 indicate a bit is being read. If the amplitudes of the negative spike 30 and the positive spike 32 are small, the chances are greater that the bit the negative spike 30 and the positive spike 32 represent will be erroneously read. Exact determination of the value of a particular bit requires complete removal of transient interference from the read response of the bit. Practically, complete removal of all interference is impossible. Therefore, determination of errors can not be made with single bit resolution. Several bit must be averaged before a determination can be made. That is, a block of bits of a specified length N must be averaged in order to determine whether write errors have occurred. If errors are detected, the entire block ofN bits is rewritten.

Generally, all recording devices have error correction code (ECC). That is, the recording device will code the data to be written. With ECC, some detection of errors in data which is later read is possible. ECC is applied to ECC blocks of data. The number of bits within the ECC blocks of data varies depending on the recording device. An objective of this invention is to identify block of written data which have too many errors for the ECC to correct. Once a block has been identified, the block is rewritten. The value ofN which this invention uses to define a block can be equal to the length of an ECC block. However, if N is too large, then resolution is lost. That is, short durations of bit errors may go undetected because the number of bits being averaged is large.

The response of the read transducer 56 is sampled by a sampling circuit 58. A filter 57 may be inserted between the read transducer 56 and the sampling circuit 58. The sampling rate of the sampling circuit 58 is the same as the rate that the write transducer writes bits onto the magnetic medium. The delay circuitry 50 and the multiplier circuitry 52 receive the sampled read response. The delay circuitry delays the sampled read response by M samples. The filtering circuitry 54 can be a digital accumulator. The output of the filtering circuitry (accumulator) 54 is analyzed after the read transducer has read a block of N bits. If the accumulator 54 reaches a threshold value, then the block of information is rewritten. Each error in the block of N written bits should advance the accumulator by one. The threshold value is set to initiate a rewrite of the block of data if a predetermined number of bits out of the block ofN bits are detected as erroneous. The accumulator is reset for each block of N bits.

The delay circuit 50, the multiplier circuitry 52, the accumulator 54 and the threshold detector 59 are all well known circuit elements which can be implemented with digital circuits. Furthermore, the analog filter 57 and the sampler 58 are common circuit elements.

Figure 6 shows another embodiment of the invention. This embodiment includes circuitry which implements a crosscorrelation function. The embodiment also includes delay circuitry 60, multiplier circuitry 62, filtering circuitry 64 and threshold detector circuitry 69. The delay circuitry 60 receives the write data signal driving the write transducer. The delay circuitry 60 delays the write data by the time required to write M bits. The multiplier circuitry 62 multiplies the delayed write data signal with the read signal of the read transducer 56. The output of the multiplier circuitry is filtered by the filtering circuitry 64. The output of the filtering circuitry 64 is connected to the threshold detector 69. If the output of the filtering circuitry 64 exceeds a minimum threshold, the data is rewritten.

This embodiment can be implemented with digital or analog circuitry. If implemented with digital circuitry, the read signal must be sampled by sampling circuitry 58. If implemented with analog circuitry, then the sampling circuitry 58 is eliminated. It can be advantageous to implement this embodiment with analog circuitry because of simplicity. The write signal will be one of two possible states. Therefore, the multiplier circuitry 62 can be implemented with a simple analog multiplier like the Analog Devices AD633 multiplier.

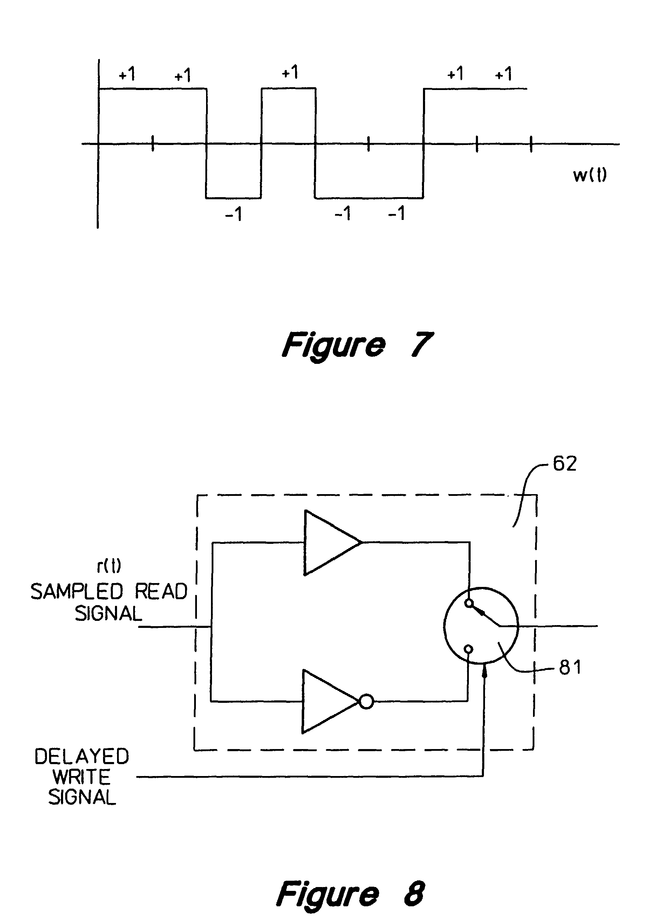

Figure 7 shows a typical write signal coupled to a write transducer. This embodiment includes the write signal having two possible signal levels. In Figure 7, the two levels are represented with +1 and -1. Figure 8 shows an implementation of the multiplier circuitry 62 when a write signal similar to the write signal shown in Figure 7 is driving the multiplier circuitry 62. The multiplier circuitry 62 includes a switch 81 which has two settings. The delayed write signal drives the switch 81 to one of the two settings depending on whether the delayed write signal is at the +1 level or the -1 level. A first switch setting couples the sampled read signal to the output of the multiplier. A second switch setting coupled an inverted sampled read signal to the output of the multiplier.

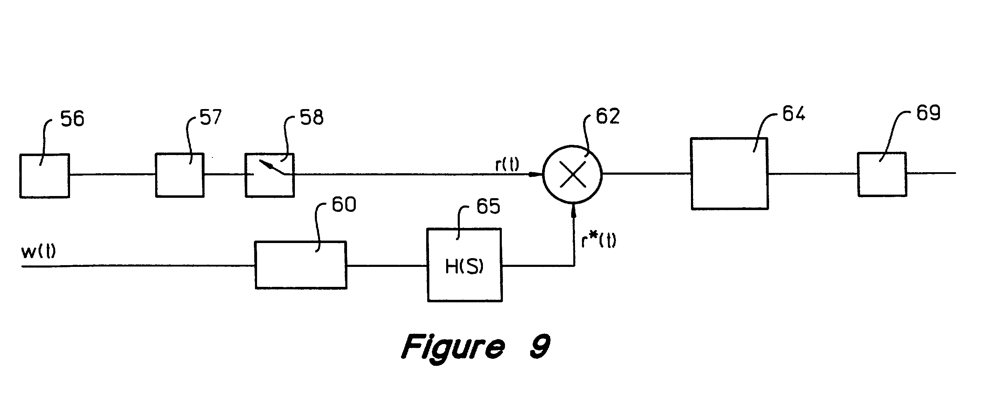

Figure 9 shows another embodiment of the invention. This embodiment also includes circuitry which implements a crosscorrelation function. This embodiment is similar to the embodiment of Figure 6, but further includes a read response filter 65. The read response filter 65 receives the write signal and generates a near-ideal read response. That is, the read response filter 65 receives the write signal and generates a response similar to the read response depicted in Figure 3. The closer the response generated by the read response filter 65 is to the actual read response, the more accurately the crosscorrelation circuitry of this embodiment detects errors in written data.

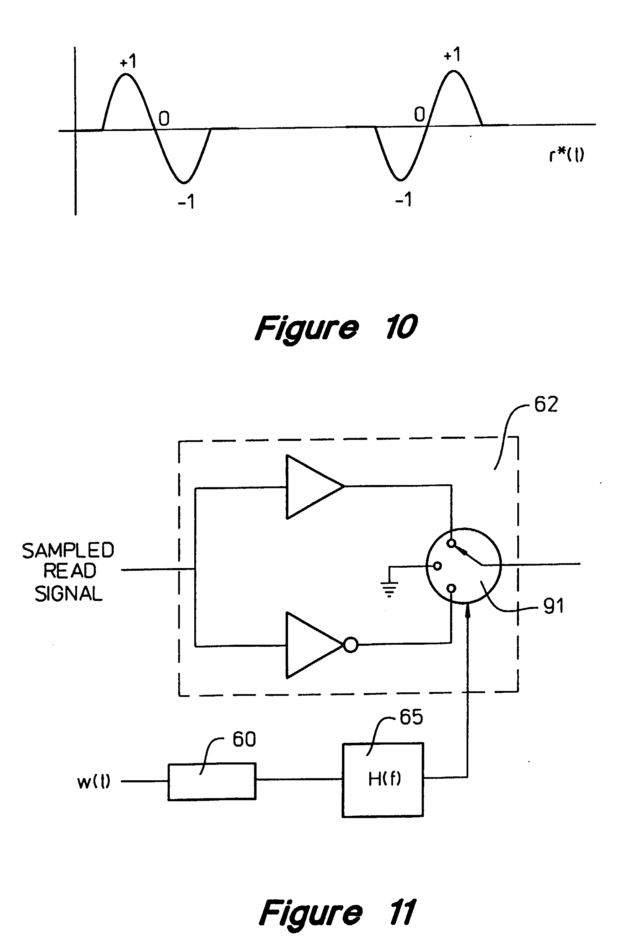

Figure 10 shows the two possible near-ideal read response waveforms. Each waveform corresponds to one of the two write signal levels. Each waveform consists of a -1 value valley, a 0 crossing and a +1 peak. The two near-ideal read response waveforms can be represented with a series of signal levels +1, 0, -1 or -1, 0, +1.

Figure 11 shows another implementation of the multiplier circuitry 62. For this embodiment, the multiplier circuitry 62 includes a three state switch 91. The output of the read response filter 65 drives the three state switch 91. The output of the read response filter 65 is always at one of the three signal levels -1, 0, or +1. Each state of the three state switch 91 corresponds to one of the three states of the output of the read response filter 65. A first switch state couples the sampled read signal to the output of the multiplier circuitry 62. a second switch state couples a neutral signal level (ground) to the output of the multiplier circuitry 62. A third switch state couples an inverted sampled read signal to the output of the multiplier circuitry 62.

Although specific embodiments of the invention have been described and illustrated, the invention is not to be limited to the specific forms or arrangements of parts so described and illustrated. The invention is limited only by the claims.

## Claims

1. An apparatus for verifying the integrity of a block of data written to a magnetic medium, comprising:
a write transducer for coupling a write signal representing the block of data to the magnetic medium;
a read transducer for coupling a magnetic signal from the magnetic medium generating a read signal;
a delay circuit for delaying a reference signal;
a multiplier for multiplying the delayed reference signal with the read signal generating a multiply signal;
a filter for filtering the multiply signal generating a filtered signal having an amplitude; and
a threshold detector for detecting whether the amplitude of the filtered signal exceeds a predetermined level.

2. The apparatus for verifying the integrity of a block of data written to a magnetic medium as recited in claim 1, wherein the reference signal is the read signal.

3. The apparatus for verifying the integrity of a block of data written to a magnetic medium as recited in claim 1, wherein the reference signal is the write signal.

4. The apparatus for verifying the integrity of a block of data written to a magnetic medium as recited in claim 1, wherein the reference signal is the write signal filtered with a read response filter.

5. The apparatus for verifying the integrity of a block of data written to a magnetic medium as recited in claim 1, further comprising means for rewriting the block of written data if the threshold detector detects the amplitude of the filtered signal exceeding the predetermined level.

6. The apparatus for verifying the integrity of a block of data written to a magnetic medium as recited in claim 5, wherein the read transducer couples the magnetic signal from the magnetic medium after the write transducer couples the write signal to the magnetic medium.

7. The apparatus for verifying the integrity of a block of data written to a magnetic medium as recited in claim 1, wherein a block of data comprises N successive bits.

8. A method for verifying the integrity of a block of data written to a magnetic medium, the method comprising the steps of:
writing a write signal comprising the block of data to a magnetic medium;
reading a read signal from the magnetic medium where the block of data was written to the magnetic medium;
delaying the write signal;
multiplying the delayed write signal with the read signal generating a multiplied signal;
filtering the multiplied signal generating a filtered signal; and
detecting the filtered signal to determined whether the filtered signal exceeds a predetermined value.

9. A method for verifying the integrity of a block of data written to a magnetic medium, the method comprising the steps of:
writing the block of data to a magnetic medium;
reading a read signal from the magnetic medium where the block of data was written to the magnetic medium;
delaying the read signal;
multiplying the delayed read signal with the read signal generating a multiplied signal;
filtering the multiplied signal generating a filtered signal; and
detecting the filtered signal to determined whether the filtered signal exceeds a predetermined value.

10. The method for verifying the integrity of a block of data written to a magnetic mediu as recited in claim 8 or 9, further comprising the step of rewriting the block of data to the magnetic medium if the filtered signal exceeds the predetermined value.
